# EUROPEAN PATENT SPECIFICATION

(11) **EP 3 097 356 B1**
(45) Date of publication and mention of the grant of the patent: **28.06.2017**
(21) Application number: 14723492.6
(22) Date of filing: 23.01.2014
(51) Int. Cl.: F23N 1/00, F16K 39/02, F16K 1/44, F16K 31/06

(54) **VALVE FOR FLUIDS**
VENTIL FÜR FLUIDE
SOUPAPE POUR DES FLUIDES

(43) Date of publication of application: 30.11.2016
(73) Proprietor: Idea S.p.A., 37049 Villa Bartolomea (Verona) (IT)
(72) Inventor: GIORDANO, Bruno, I-37049 Villa Bartolomea (Verona) (IT); GIRALDO, Morgan, I-35020 Codevigo (Padova) (IT)
(74) Representative: Anselmi, Davide
(86) International application number: PCT/IT2014/000021
(87) International publication number: WO 2015/111087

(56) References cited:
- JP-U- S63 184 281
- US-A- 5 810 030
- US-A1- 2006 172 237
- US-A1- 2008 076 079
- US-A1- 2009 183 510

## Description

### Technical field

This invention relates to a valve for fluids. Preferably, this valve is used to shut off gas at a burner, but it could be used in any sector to shut off, in general, a fluid. Moreover, this invention relates to a type of valve having two consecutive and independent stages.

### Background art

According to the prior art, a valve of this type extends between an inlet duct of the fluid and an outlet duct of the fluid along a main direction of extension coinciding with the main direction of propagation of the gas. Examples of prior art valves are described in documents US2008/076079, US2009/183510, US2006/172237.

More specifically, the valve comprises an intermediate chamber positioned between the inlet duct and the outlet duct and having an inlet opening forming a fluid communication between the inlet duct and the intermediate chamber and an outlet opening forming a fluid communication between the outlet duct and the intermediate chamber.

Moreover, the valve usually comprises a first shutter operatively associated with the inlet opening and movable between an open position and a closed position of the inlet opening along a direction of movement transversal to the main direction of extension. In addition, there is a second shutter operatively associated with the outlet opening and movable between an open position and a closed position of the outlet opening. In other words, the two stages previously mentioned refer to the passage from the inlet duct to the intermediate chamber by the movement of the first shutter (first stage) and the passage from the intermediate chamber to the outlet duct by movement of the second shutter (second stage). Generally, electromagnetic or pneumatic systems or electromagnetic and pneumatic systems combined together are preferably used for moving the two shutters.

In the case of electromagnetic shutters, the shutter is moved by an electromagnetic attraction between a ferromagnetic part, usually mounted on the shutter, and an electromagnetic circuit associated with the frame of the valve. In the case of electromagnetic shutters, the shutter is moved by a pneumatic cylinder.

In any case, both the first and the second shutter currently move along a direction at right angles to the direction of propagation of the gas. In other words, the force needed for opening a shutter is given not only by the force component linked to physical movement of the shutter (linked mainly to the elastic means which keep the shutter in the closed position), but also by the force component needed to resist the pressure exerted by the gas on the closed shutter.

However, this prior art technique has several drawbacks.

A first drawback is linked to the fact that the presence of two shutters with related movement systems positioned in succession along the direction of extension results, overall, in large dimensions relative to the size of a valve. The drawback affects the space available in the compartment in which the valve is installed. Moreover, the dimensions of such a valve also create problems for the space required for transporting (before assembly) and packaging of the valve.

In addition, as described above, to open each shutter it is necessary to apply a force given by the sum of the force needed to move the shutter (again linked to the elastic means which keep the shutter in the closed position) and the force needed to resist the pressure of the gas. Thus, another drawback is linked to the fact that it is necessary to provide sufficient energy to the shutter movement systems to perform a complete movement. However, in some cases, the quantity of energy to be supplied is high, especially in an apparatus comprising a plurality of valves.

In this situation, the aim of this invention is to provide a valve for fluids which overcomes the above-mentioned drawbacks.

### Disclosure of the invention

In particular, the aim of this invention is to provide a valve for fluids which has reduced dimensions compared with the prior art.

Another aim of this invention to provide a valve for fluids which makes it possible to reduce the energy consumption needed for moving the shutters.

The aims indicated are substantially achieved by a valve for fluids as described in the appended claims.

### Brief description of the drawings

Further characteristic features and advantages of this invention will emerge more clearly from the detailed description of several preferred, but not exclusive embodiments of a valve for fluids illustrated in the accompanying drawings, in which:
- Figure 1 is an axonometric view of a valve for fluids according to this invention;
- Figure 2 shows a top view of the valve for fluids of Figure 1, in a cross-section in a plane at right angles, in a first operating position;
- Figure 3 shows a front view of the valve of Figure 2 in a second operating position;
- Figure 4 shows a top view of the valve of Figure 2 in a third operating position;
- Figure 5 is an axonometric view of an enlargement of the valve of Figure 2; and
- Figure 6 shows a front view of an alternative embodiment of the valve for fluids of Figure 2.

### Detailed description of the preferred embodiments of the invention

With reference to the accompanying drawings, the numeral 1 denotes in its entirety a valve for fluids according to this invention. Reference will be made below mainly to the use of the valve 1 for gas (as it is the preferred fluid for this invention) but without limiting the invention to that fluid.

The valve 1 extends between an inlet duct 2 of the fluid and an outlet duct 3 of the fluid along a main direction of extension 4. The main direction of extension 4 also forms the main direction of propagation of the fluid.

Moreover, the valve 1 has an intermediate chamber 5 positioned between the inlet duct 2 and the outlet duct 3, with an inlet opening 6 forming a fluid communication between the inlet duct 2 and the intermediate chamber 5 and an outlet opening 7 forming a fluid communication between the outlet duct 3 and the intermediate chamber 5.

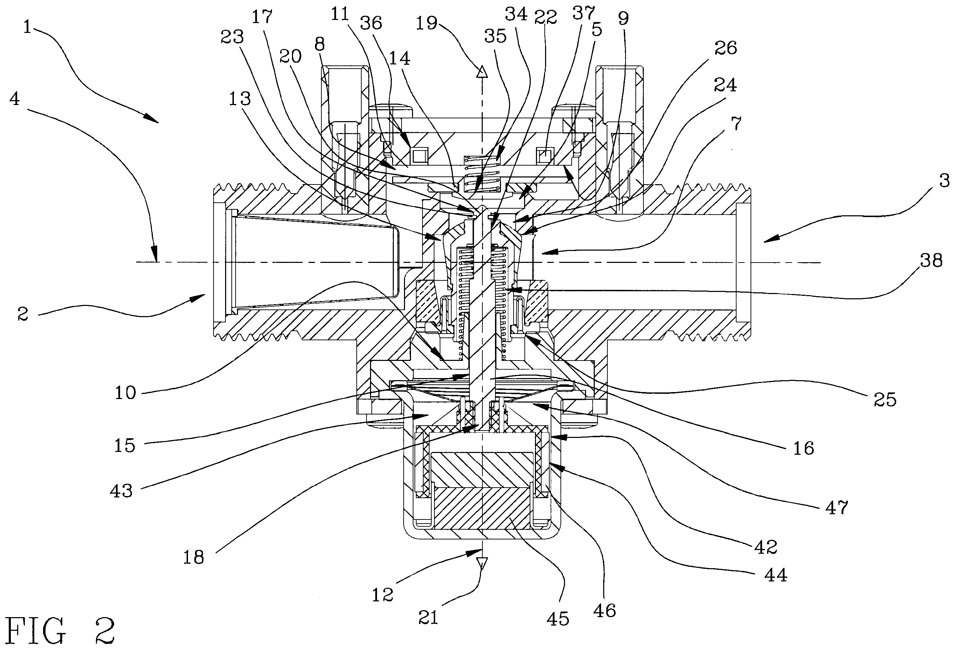

In other words, the intermediate chamber 5 defines a communication space between the inlet duct 2 and the outlet duct 3. Figure 2 shows that the intermediate chamber 5 extends transversally relative to the main direction of extension 4. Preferably, the intermediate chamber 5 extends at right angles to the main direction of extension 4.

More specifically, the inlet duct 2 has an end portion 8 superposed on the intermediate chamber 5 along a direction at right angles to the main axis of extension 4. In other words, the end portion 8 of the inlet duct 2 is in communication with the inlet opening 6. In yet other words, the end portion 8 of the inlet duct 2 is positioned between an upper wall 9 of the valve 1 and the inlet opening 6.

In effect, the inlet opening 6 extends along a direction transversal (preferably orthogonal) to the main direction of extension 4. In that way, for the gas to pass from the inlet duct 2 to the intermediate chamber 5 it must turn through a right angle.

Moreover, the outlet opening 7 extends along the main direction of extension 4 in such a way as to be oriented according to an axis transversal (preferably at right angles) to an axis of orientation of the inlet opening 6. In that way, once the gas has entered the intermediate chamber 5 through the inlet opening 6, it must turn through approximately a right angle to leave from the outlet opening 7.

It should also be noted that the intermediate chamber 5 extends away from the inlet opening 6 (along a direction transversal to the main direction of extension 4) to a bottom wall 10 which delimits the intermediate chamber 5.

In addition, the valve 1 comprises a first shutter 11 operatively associated with the inlet opening 6 and movable between a closed position and an open position of the inlet opening 6 along a direction of movement 12 transversal to the main direction of extension 4. Moreover, the valve 1 comprises a second shutter 13 operatively associated with the outlet opening 7 and movable between an open position and a closed position of the outlet opening 7.

More in detail, the first shutter 11 comprises a plate extending at right angles to the axis of extension of the inlet opening 6. In addition, the first shutter 11 comprises an annular sealing gasket 14 positioned on the plate and facing the inlet opening 6 and shaped in a fashion similar to the edge of the inlet opening 6 in such a way as to close the passage during the closed position of the first shutter 11.

It should be noted that the direction of movement 12 is preferably at right angles to the main direction of extension 4.

In accordance with this invention, the first shutter 11 and the second shutter 13 are mutually superposed along the direction of movement 12. In other words, the first shutter 11 moves in the end portion 8 of the inlet duct 2, whilst the second shutter 13 moves inside the intermediate chamber 5.

In any event, the second shutter 13 is movable along the direction of movement 12- In other words, the second shutter 13 moves along the same direction of movement 12 of the first shutter 11. In yet other words, the first shutter 11 and the second shutter 13 move coaxially even if independently with regard to the direction of movement (as will be explained in more detail below).

More specifically, the valve 1 comprises a unit 15 for moving the first shutter 11 and the second shutter 13 along the direction of movement 12 for moving each shutter. The movement unit 15 is in common to both the shutters.

In the preferred embodiment, the movement unit 15 is a rod 16 extending between a respective operating portion 17 which can engage the first shutter 11 or the second shutter 13 for moving them and a respective drive portion 18 opposite to the operating portion 17.

It should be noted that the rod 16 is movable along the direction of movement 12 in a first direction 19 for moving the first shutter 11 from the closed position to the open position. The first direction 19 is directed towards the upper wall 9 to open the first shutter 11. More specifically, the operating portion 17 of the rod 16 has a pushing end 20 facing the upper surface and able to abut against the first shutter 11 for pushing it from the closed position to the open position. In other words, the pushing end 20 pushes the first shutter 11 away from the intermediate chamber 5 forming a passage for the gas through the inlet opening 6.

Moreover, the rod 16 is movable along the direction of movement 12 according to a second direction 21 opposite to the first direction to move the second shutter 13 from the closed position to the open position in such a way that the movement of a shutter is independent of the movement of the other shutter. In other words, the movement of the first shutter 11 is independent of the movement of the second shutter 13- In effect, this independence of the movements is given by the fact that for moving a shutter it is necessary for the rod 16 to move in a direction opposite to the movement for the other shutter. In that way, it should also be noted that the time the first shutter 11 remains in the closed position is independent of the time the second shutter 13 remains in the closed position.

More in detail, the rod 16 is inserted through a through hole 22 present on the second shutter 13. In other words, the rod 16 passes through the second shutter 13. It should be noted that the through hole 22 of the second shutter 13 has a greater width than the respective width of the rod 16 (measured perpendicularly to the direction of movement 12) in such a way as to leave a gap 33 between the second shutter 13 and the rod 16 for the passage of the fluid when the first shutter 11 is open and the second shutter 13 is closed. Moreover, the gap 33 allows the sliding of the rod 16 relative to the second shutter 13 in such a way that the rod 16 can be moved irrespective of the movement of the second shutter 13.

Moreover, the movement unit 15 comprises pulling means 23 fixed to the operating portion 17 of the rod 16 for pulling the second shutter 13 from the closed position to the open position. More in detail, the pulling means 23 comprise a stop fixed to the operating portion 17 of the rod 16 and projecting laterally to it. More specifically, the stop protrudes laterally for a length greater than the space between the second shutter 13 and the rod 16 according to a direction perpendicular to the direction of movement 12 in such a way as to pull the second shutter 13 during the movement of the rod 16 according to the second direction 21. Preferably, the stop is a washer fixed to the rod 16 at a suitable seat. Alternatively, the stop may be defined by a suitable protrusion formed on the profile of the rod 16.

Moreover, the valve 1 comprises first sealing means 24 and second sealing means 25 positioned between the second shutter 13 and the outlet opening 7. The second sealing means 25 are spaced from the first sealing means 24 along a direction away from the first sealing means 24.

It should be noted that the intermediate chamber 5 has a widening 26 at the outlet opening 7. In other words, at the height of the outlet opening 7, according to the direction of movement 12, there is the widening 26.

More specifically, the widening 26 of the intermediate chamber 5 defines a space for detachment from the second shutter 13 placed in fluid communication with the outlet opening 7.

It should be noted that the intermediate chamber 5 has a first passage 27 defined between the inlet opening 6 and the detachment space and a second passage 28 defined between the bottom wall 10 and the detachment space. Consequently, the first sealing means 24 operate on the first passage 27, while the second sealing means 25 operate on the second passage 28 in such a way that the gas does not pass (during the closed position of the second shutter 13) in the detachment space.

Moreover, the second sealing means 25 comprise a first part 29 connected to the intermediate chamber 5 and a second part 30 connected to the second shutter 13. The first and second parts 30 of the second sealing means 25 have an annular extension around the second shutter 13.

It should be noted that the second passage 28 is defined between the intermediate chamber 5 and the second shutter 13 at the second sealing means 25.

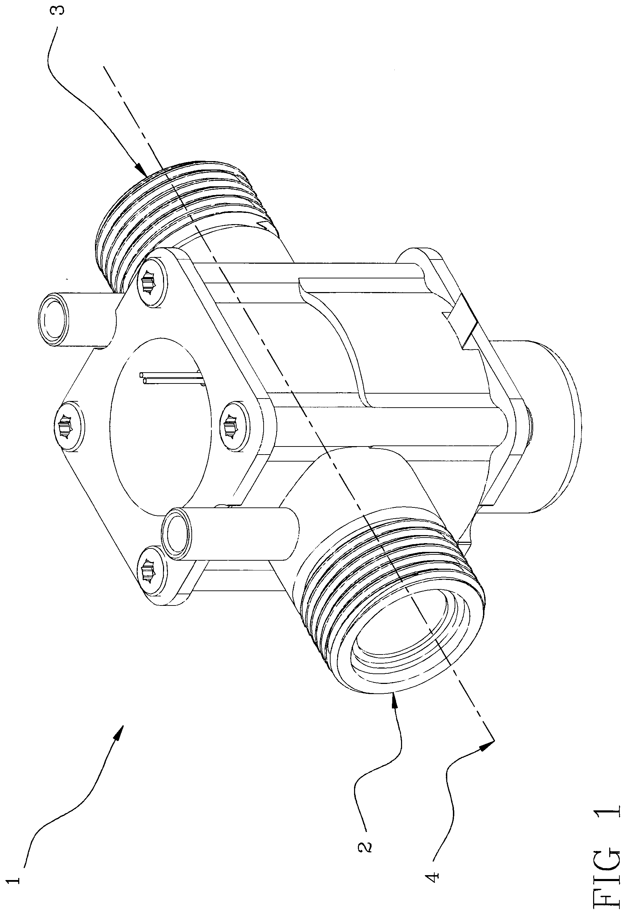

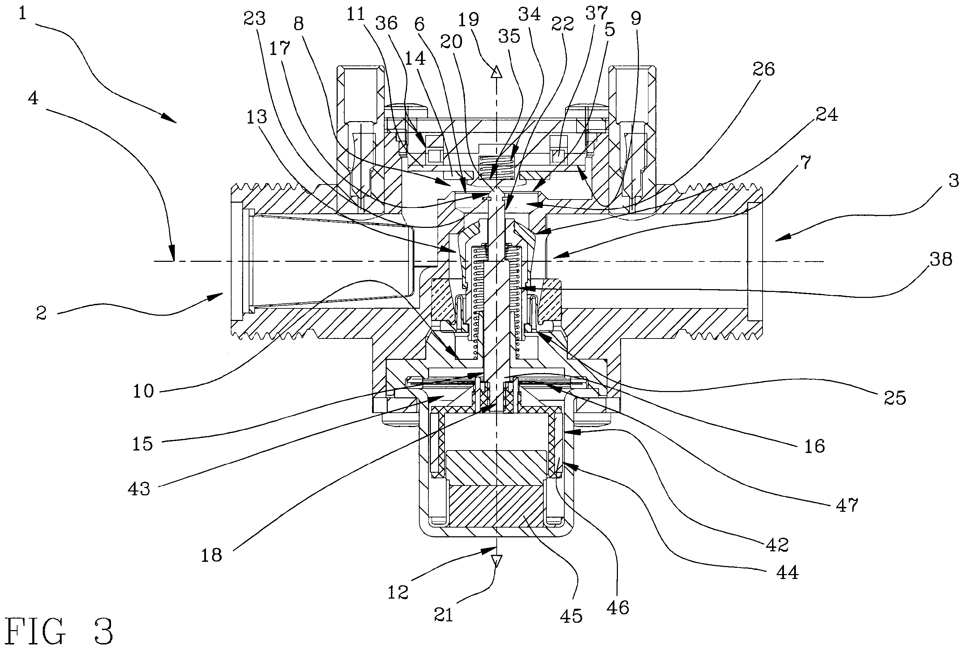

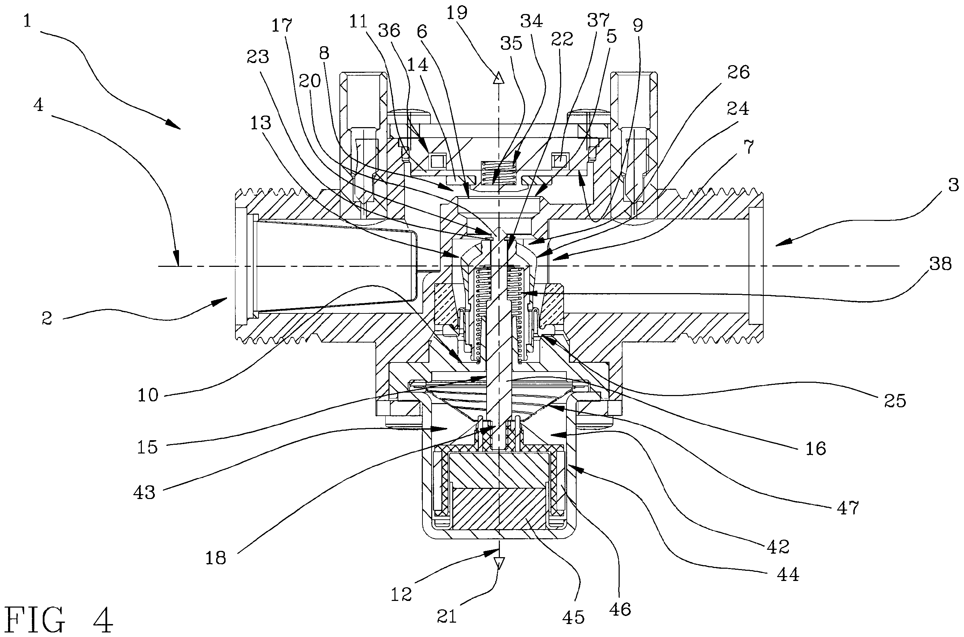

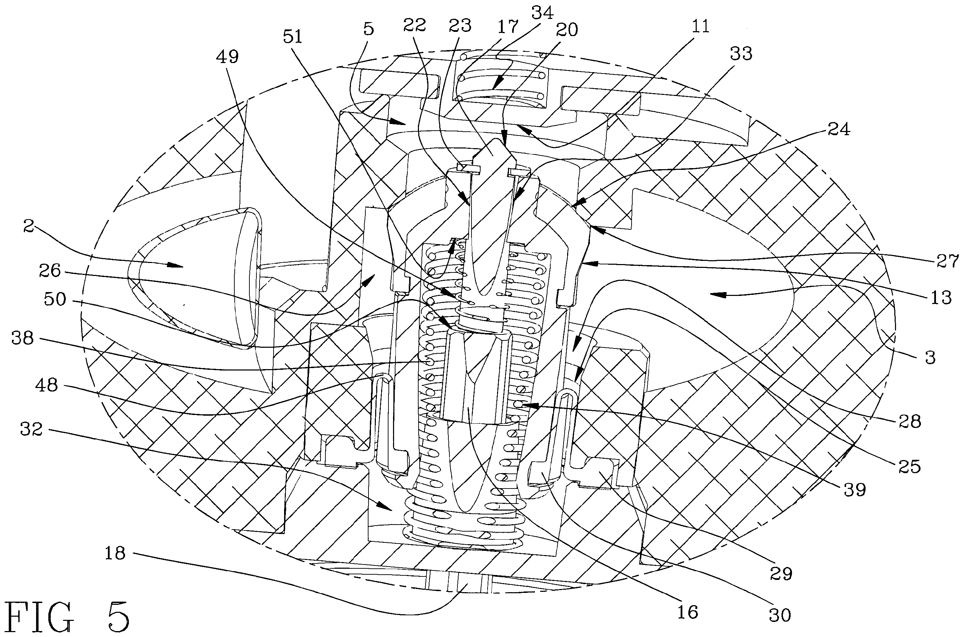

In the preferred embodiment illustrated in figures 1 to 5, the first 29 and the second part 30 of the second sealing means 25 comprise a single body and are connected together by a flexible portion 48 with an inverted U shape. Moreover, in this preferred embodiment, the first sealing means 24 and the second part 30 of the second sealing means 25 comprise separate bodies.

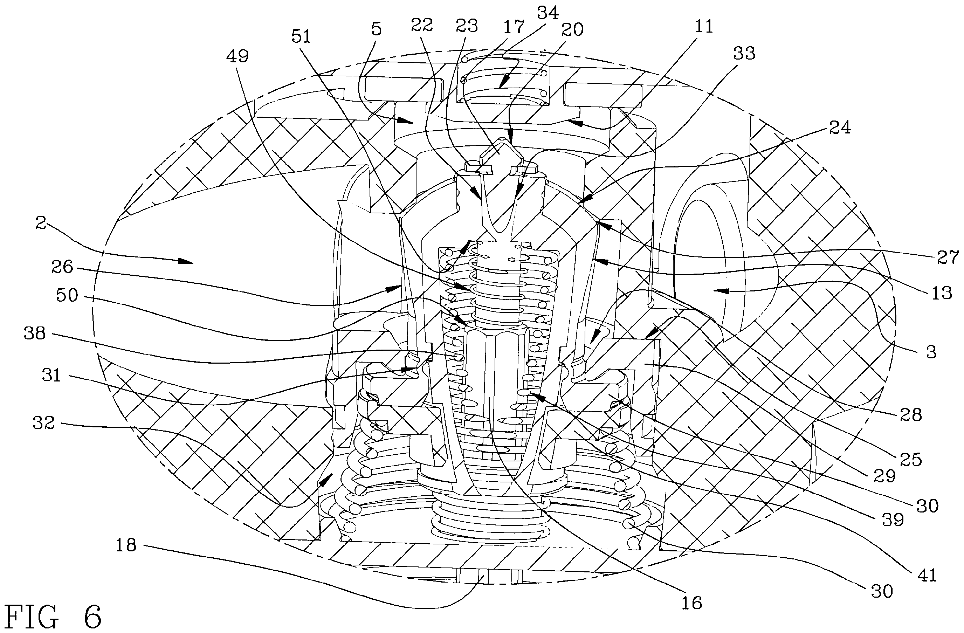

In an alternative embodiment illustrated in Figure 6, the first sealing means 24 and the second part 30 of the second sealing means 25 comprise a single body. In this embodiment, between the first sealing means 24 and the second part 30 of the second sealing means 25 there is an annular portion 31 of weakness forming a flexible zone of the sealing means. The annular portion 31 of weakness is advantageously configured to compensate for any dimensional differences of the single body located between the first sealing means 24 and the second part 30 of the second sealing means 25.

Moreover, the first 29 and the second part 30 of the second sealing means 25 are separate bodies. More specifically, the second part 30 of the second sealing means 25 has a part protruding along a direction transversal to the direction of movement 12. The first part 29 of the second sealing means 25 also has a respective protruding part to be coupled to the protruding part of the second sealing means 25 during the closed position of the second shutter 13. It should be noted that the first part 29 of the second sealing means 25 forms at the centre the second passage 28.

Moreover, the intermediate chamber 5 comprises a transient space 32 extending away from the first sealing means 24 and from the first shutter 11. The transient space 32 is in fluid communication, during the closed position of the second shutter 13, with the rest of the intermediate chamber 5 through the gap 33. More specifically, the transient space 32 extends from the bottom wall 10 to the second passage 28.

In that way, after the first shutter 11 has been opened, the gas flows through the gap 33 in such a way as not to exert pressure on the second shutter 13 along the second direction 21. In other words, the pressure of the gas disperses through the gap 33 and by the passage of the gas in the transient space 32.

Moreover, the valve 1 comprises first elastic means 34 positioned between the first shutter 11 and the upper wall 9 of the valve 1. The first elastic means 34 are extended during the closed position of the first shutter 11 and compressed during the open position of the first shutter 11 in such a way as to facilitate the return of the first shutter 11 from the open position to the closed position. Moreover, the first elastic means 34 are advantageously configured to keep the first shutter 11 abutted against the rod 16 during the passage from the open position to the closed position.

Preferably, the first elastic means 34 are positioned in contact with the first shutter 11 at a suitable recess 35 formed on the first shutter 11 and which faces the upper wall 9 of the valve 1.

In the preferred embodiment, the first elastic means 34 comprise a helical spring.

Moreover, the valve 1 comprises means 36 for magnetic attraction positioned between the upper wall 9 and the first shutter 11 and configurable between an active condition and an inactive condition.

Preferably, the magnetic attraction means 36 comprise an electromagnet 37 located at the upper wall 9 and ferromagnetic material positioned on the first shutter 11. Even more preferably, the electromagnetic material could be incorporated in the first shutter 11.

In that way, activating the electromagnet 37 (passing from the inactive condition to the active condition) generates an electromagnetic field which involves the ferromagnetic material present in the first shutter 11 so as to attract the first shutter 11 towards the upper wall 9. In an alternative embodiment not illustrated in the accompanying drawings, the electromagnet 37 could be positioned on the first shutter 11 whilst the ferromagnetic material could be positioned on the upper wall 9.

During the active condition, the magnetic attraction means 36 are configured for attracting the first shutter 11 towards the upper wall 9 when the first shutter 11 is moving from the closed position towards the open position and when the distance between the first shutter 11 and the upper wall 9 is less than the distance between the first shutter 11 during the rest position and the upper wall 9. In other words, the magnetic attraction means 36 are configured to act on the first shutter 11 only after the latter has started to move from the closed position towards the open position. In yet other words, the magnetic attraction means 36 act when the distance between the first shutter 11 and the upper wall 9 is less than a predetermined minimum distance. In effect, the magnetic attraction means 36 are configured to generate a magnetic field which can move the first shutter 11 only when the latter is at a distance from the upper wall 9 less than the distance between the first shutter 11 during the rest position and the upper wall 9- The distance is the above-mentioned predetermined minimum distance.

Advantageously, this configuration of the magnetic attraction means 36 makes it possible to reduce the amount of energy necessary to move completely the first shutter 11 from the closed position to the open position, because the electromagnetic field generated is able to operate only at distances of less than the predetermined minimum distance. In addition, the magnetic attraction means 36 are configured to keep the first shutter 11 abutted against the upper wall 9 during the open position in such a way as to keep the first shutter 11 open.

Moreover, the valve 1 comprises second elastic means 38 positioned between the second shutter 13 and the bottom wall 10 of the intermediate chamber 5. The second elastic means 38 are extended during the closed position of the second shutter 13 and compressed during the open position of the second shutter 13 in such a way as to facilitate the return of the second shutter 13 from the open position to the closed position.

Moreover, the second elastic means 38 are designed to keep the second shutter 13 in the closed position. It should be noted that the second elastic means 38 extend inside the intermediate chamber 5 and, in detail, in an inner cavity 39 of the second shutter 13. In effect, the second shutter 13 substantially has an inverted U shape wherein the opening of this U shape is directed towards the bottom wall 10. The shape of the second shutter 13 forms the inner cavity 39 in which the second elastic means 38 are at least partly positioned. In other words, the second elastic means 38 extend along the direction of movement 12. More in detail, the second elastic means 38 are positioned around the rod 16. Preferably, the second elastic means 38 comprise a helical spring inside of which the rod 16 passes.

Thus, the spring also extends inside the inner cavity 39 of the second shutter 13.

Moreover, in the alternative embodiment illustrated in Figure 6, the valve 1 according to this invention comprises third elastic means 40 positioned between the second part 30 of the second sealing means 25 and the bottom wall 10 of the intermediate chamber 5 on the opposite side relative to the first shutter 11. The third elastic means 40 are at least partly compressed in such a way as to keep the second part 30 of the second sealing means 25 abutted against the first part 29 of the second sealing means 25 during the closed position of the second shutter 13. In other words, the third elastic means 40 act between the bottom wall 10 and the second part 30 of the second sealing means 25 along the direction of movement 12- In that way, when the second shutter 13 is in the closed position, the third elastic means 40 keep the second part 30 of the second sealing means 25 abutted against the first part 29 of the second sealing means 25, when the second shutter 13 moves from the closed position to the open position the third elastic means 40 are compressed in such a way as to generate a passage between the second part 30 of the second sealing means 25 and the first part 29 of the second sealing means 25.

Preferably, as shown in Figure 6, the third elastic means 40 comprise a helical spring and an annular support 41. The annular support 41 rests on the second part 30 of the second sealing means 25 and surrounds the second shutter 13 in such a way as to define a support for the helical spring. The helical spring is inserted between the bottom wall 10 and the annular support 41 so as not act directly on the second part 30 of the second sealing means 25, but on the annular support 41. It should be noted that the annular support 41 is movable along the direction of movement 12. More specifically, the annular support 41 is movable according to a predefined stroke and delimited by stops made on the second shutter 13.

In the preferred embodiment illustrated in Figures 1 to 5, the third elastic means 40 are not present since the flexible portion 48 keeps the first 29 and the second part 30 of the second sealing means 25 connected together.

Further, it should be noted that both the embodiments of the valve comprise fourth elastic means 49 positioned between a wide portion 50 of the rod 16 positioned in the inner cavity 39 and a contact surface 51 of the second shutter 13 delimiting the inner cavity 39 along the direction of movement 12 according to the first direction 19- The wide portion 50 of the rod 16 defines a step for retaining the fourth elastic means 49 in such a way as to lock them in position. Advantageously, the fourth elastic means 49 allow the pushing means 23 to be kept in contact with the second shutter 13 during the closed position.

In addition, the valve 1 comprises means 42 for driving the rod 16 associated with the drive portion 18 of the rod 16. More specifically, the means 42 for driving the rod 16 are positioned in a service compartment 43 of the valve 1 made between the bottom wall 10 and a lower wall of the valve 1 opposite the upper wall 9 along the direction of movement 12.

It should be noted that the valve 1 extends along the direction of movement 12 between the upper wall 9 and the lower wall.

More specifically, the means 42 for driving the rod 16 are configurable between a rest condition, a first operating condition and a second operating condition. During the rest condition, the first shutter 11 and the second shutter 13 are in the closed position and the pushing end 20 of the rod 16 is positioned between the second shutter 13 and the first shutter 11. During the first operating condition, the rod 16 moves along the direction of movement 12 in the first direction 19 in such a way as to move the first shutter 11 towards the upper wall 9 (to move it from the closed position to the open position).

During the second operating condition, the rod 16 moves along the direction of movement 12 in the second direction 21 in such a way as to move the second shutter 13 towards the bottom wall 10 (to move it from the closed position to the open position).

More specifically, the drive means 42 comprise an electromagnetic element 44 to move the rod 16 along the first direction 19 or along the second direction 21. The electromagnetic element 44 is inserted inside the service compartment 43 and is associated with the drive portion 18 of the rod 16. In other words, the rod 16 passes through the bottom wall 10 and is partly inserted in the service compartment 43.

Still more specifically, the electromagnetic element 44 comprises a magnet 45 fixed in position relative to the rod 16 and an electromagnetic circuit 46 connected to the drive portion 18 of the rod 16. In other words, the electromagnetic circuit 46 moves relative to the magnet 45 towards or away from it. Preferably, the electromagnetic 45 is movable, depending on the direction of the electrical current, from the rest condition to the first operating condition or to the second operating condition and vice versa.

In addition, the electromagnetic circuit 46 comprises an electricity power cable 47 extending inside the service compartment 43 towards an outlet opening 7 put in communication between the service compartment 43 and the outside of the valve 1 for connection to an electrical power source.

The power cable 47 is positioned between the bottom wall 10 and the rest of the electromagnetic circuit 46 and is wound in the form of a spiral in such a way as to reduce the interference with the movement of the electromagnet 45. The electromagnetic circuit 46 is of the voice-coil type.

As regards the operation of this invention, it may be derived directly from the description above.

More specifically, the opening of the valve 1 comprises moving the rod 16 along the first direction 19 using a suitable command to the electromagnetic circuit 46 in such a way as to move the first shutter 11 from the closed position towards the open position. During this movement (or before) the magnetic attraction means 36 are activated in such a way as to complete the movement of the first shutter 11 from the closed position to the open position. More specifically, the magnetic attraction means 36 attract the first shutter 11 towards the upper wall 9 in such a way as to definitively open the first stage. In other words, the movement of the first shutter 11 occurs at two successive points in time: during a first instant the rod 16 moves the first shutter 11 close to the upper wall 9; during a second instant the magnetic attraction means 36 complete the movement of the first shutter 11 towards the upper wall 9.

After the opening of the first shutter 11, the magnetic attraction means 36 are kept active in such a way that the first shutter 11 remains in the open position. During the opening movement of the first shutter 11, the first elastic means 34 are compressed while the second elastic means 38 and the third elastic means 40 keep the second shutter 13 in the closed position.

Once the first shutter 11 is open, the gas enters through the inlet opening 6 into the intermediate chamber 5 and penetrates into the gap 33 arriving at the transient space 32. However, until the second shutter 13 is opened, the gas is locked inside the intermediate chamber 5 thanks to the presence of the first sealing means 24 and second sealing means 25.

Then, the rod 16 is moved from the first operating condition to the second operating condition, in the second direction 21. In this way, the pulling means 23 associated with the operating portion 17 of the rod 16 move the second shutter 13 from the closed position to the open position generating a passage for the gas from the gap to the outlet duct 3. During this movement, the second elastic means 38 and the third elastic means 40 are compressed. After the opening of the second shutter 13, the gas can pass through the valve 1.

This invention achieves the preset aims.

More specifically, since the rod for moving the first shutter is shared with the second shutter (whilst keeping the two movements independent) and since the first shutter is superposed over the second shutter, the valve in its entirety has reduced dimensions. In effect, there are no longer the two stages in succession and some mechanical parts (rod) are now shared by the two stages.

In addition, the drive of the first shutter allows a considerable energy saving because the magnetic attraction means are configured to perform a reduced movement of the first shutter and it therefore requires a lower quantity of electricity. In other words, the very low energy is linked to the structure of the valve and in particular to the fact that it is possible to control the supply of power to the second actuator in such a way as to dispense a very precise "extra-force", for a few moments, such as to allow the opening of the first stage. Following dispensing of the "extra force", the overall energy consumption is reduced because it is the electromagnet positioned above the first shutter to keep the latter in the open position. It should also be noted that this aspect guarantees the possibility of certifying the first stage according to high safety class levels whilst keeping the energy consumption very low.

Moreover, the energy saving is also achieved by the fact that after the first stage, the gas passes inside the second in the transient space and does not exert pressure on the second shutter. In effect, the part of the gas which remains between the inlet opening and the second shutter acts on the second shutter according to the second direction of movement, while the part of the gas which penetrates inside the transient space acts on the second shutter according to the first direction of movement. Thus, to open the second shutter, it is not necessary to totally resist the pressure of the gas entering.

In other words, the low energy consumption depends on the fact that the action of the gas on the second shutter is almost exclusively radial (with a very small axial component). Thus, this aspect guarantees the possibility of also certifying the second stage according to high safety class levels whilst keeping the energy consumption very low.

It should also be noted that this invention is relatively easy to produce and that even the cost connected with implementing the invention is not very high.

## Claims

1. A valve (1) for fluids extending between an inlet duct (2) of the fluid and an outlet duct (3) of the fluid along a main direction of extension (4), comprising:
- an intermediate chamber (5) positioned between the inlet duct (2) and the outlet duct (3) and having an inlet opening (6) forming a fluid communication between the inlet duct (2) and the intermediate chamber (5) and an outlet opening (7) forming a fluid communication between the outlet duct (3) and the intermediate chamber (5);
- a first shutter (11) operatively associated with the inlet opening (6) and movable between an open position and a closed position of the inlet opening (6) along a direction of movement (12) transversal to the main direction of extension (4);
- a second shutter (13) operatively associated with the outlet opening (7) and movable between an open position and a closed position of the outlet opening (7);said first shutter (11) and second shutter (13) being mutually superposed along the direction of movement (12) and the second shutter (13) being movable along the direction of movement (12);
- a unit (15) for moving the first shutter (11) and the second shutter (13) movable along the direction of movement (12) for moving each shutter; the movement unit (15) being common to both the shutters; said movement unit (15) comprising a rod (16) extending between a respective operating portion (17) which can engage the first shutter (11) or the second shutter (13) for moving them and a respective drive portion (18) opposite to the operating portion (17);
the rod (16) being movable along the direction of movement (12) according to a first direction (19) to move the first shutter (11) from the closed position to the open position; the rod (16) being movable along the direction of movement (12) according to a second direction (21) opposite to the first direction to move the second shutter (13) from the closed position to the open position in such a way that the movement of a shutter is independent of the movement of the other shutter;
- means (42) for driving the rod (16) associated with the drive portion (18) of the rod (16);
said drive means (42) comprising an electromagnetic element (44) to move the rod (16) along the first direction (19) or along the second direction (21); **characterised in that** the electromagnetic circuit (46) of the electromagnetic element (44) is of the voice-coil type and **in that** the rod (16) is inserted through a through hole present on the second shutter (13); the movement unit (15) comprising pulling means (23) fixed to the operating portion (17) of the rod (16) for pulling the second shutter (13) from the closed position to the open position; said hole of the second shutter (13) having a greater width than the respective width of the rod (16) in such a way as to leave a gap (33) between the second shutter (13) and the rod (16) for the passage of the fluid when the first shutter (11) is open and the second shutter (13) is closed.

2. The valve (1) for fluids according to claim 1, **characterised in that** the operating portion (17) of the rod (16) has a pushing end (20) which can be abutted against the first shutter (11) for pushing it from the closed position to the open position.

3. The valve (1) for fluids according to any one of the preceding claims, **characterised in that** it comprises first sealing means (24) positioned between the second shutter (13) and the outlet opening (7) and second sealing means (25) positioned between the second shutter (13) and the intermediate chamber (5); the second sealing means (25) being spaced relative to the first sealing means (24) along a direction of moving away from the first sealing means (24).

4. The valve (1) according to claim 3, **characterised in that** the second sealing means (25) comprise a first part connected to the intermediate chamber (5) and a second part connected to the second shutter (13).

5. The valve (1) according to claim 4, **characterised in that** the second part (30) of the second stealing means (25) has a part protruding along a direction transversal to the direction of movement (12); the first part (29) of the second sealing means (25) having a protruding part to be coupled to the protruding part of the second sealing means (25) during the closed position of the second shutter (13).

6. The valve (1) according to claim 4 or 5, **characterised in that** the first sealing means (24) and the second part (30) of the second sealing means (25) comprise separate bodies.

7. The valve (1) according to claim 4 or 5, **characterised in that** the first sealing means (24) and the second part (30) of the second sealing means (25) are formed by a single body; between the first sealing means (24) and the second part (30) of the second sealing means (25) there is an annular portion (31) of weakness forming a flexible zone of the sealing means.

8. The valve (1) according to any of claims 5 to 7 when dependent on claim 5, **characterised in that** the intermediate chamber (5) comprises a transient space (32) extending away from the first sealing means (24) and from the first shutter (11); the transient space (32) being in fluid communication, during the closed position of the second shutter (13), with the rest of the intermediate chamber (5) through the gap (33).

9. The valve (1) according to any one of the preceding claims, **characterised in that** it comprises first elastic means (34) positioned between the first shutter (11) and the upper wall (9) of the valve (1) spaced from the inlet opening (6) away from the second shutter (13); the first elastic means (34) being extended during the closed position of the first shutter (11) and compressed during the open position of the first shutter (11) in such a way as to facilitate the return of the first shutter (11) from the open position to the closed position.

10. The valve (1) according to claim 9 **characterised in that** it comprises magnetic attraction means (36) positioned between the upper wall (9) and the first shutter (11) and configurable between an active condition and an inactive condition; during the active condition the magnetic attraction means (36) are configured for attracting the first shutter (11) towards the upper wall (9) when the first shutter (11) is moving from the closed position towards the open position and when the distance between the first shutter (11) and the upper wall (9) is less than the distance between the first shutter (11) during the rest position and the upper wall (9).

11. The valve (1) according to claim 10, **characterised in that** the magnetic attraction means (36) are configured to keep, during the active condition, the first shutter (11) abutted against the upper wall (9) during the open position in such a way as to keep the first shutter (11) open.

12. The valve (1) according to claim 10 or 11, **characterised in that** the magnetic attraction means (36) comprise an electromagnet (45) located at the upper wall (9) and ferromagnetic material associated with the first shutter (11).

13. The valve (1) according to any one of the preceding claims, **characterised in that** it comprises second elastic means (38) positioned between the second shutter (13) and a bottom wall (10) of the intermediate chamber (5) on the opposite side relative to the first shutter (11); the second elastic means (38) being extended during the closed position of the second shutter (13) and compressed during the open position of the second shutter (13) in such a way as to facilitate the return of the second shutter (13) from the open position to the closed position.

14. The valve (1) according to any of the previous claims dependent on claim 4, **characterised in that** it comprises third elastic means (40) positioned between the second part (30) of the second sealing means (25) and the bottom wall (10) of the intermediate chamber (5) on the opposite side relative to the first shutter (11); the third elastic means (40) being at least partly compressed in such a way as to keep the second part (30) of the second sealing means (25) abutted against the first part (29) of the second sealing means (25) during the closed position of the second shutter (13).

15. The valve (1) according to any one of the preceding claims, **characterised in that** the electromagnetic element (44) comprises a magnet (45) fixed in position relative to the rod (16) and an electromagnetic circuit (46) connected to the drive portion (18) of the rod (16); the electromagnetic circuit (46) being operatively associated with the magnet (45) and movable towards or away from it.

16. The valve (1) according to claim 15, **characterised in that** the electromagnetic circuit (46) comprises at least one electricity power cable (47) wound in the form of a spiral.

## Patentansprüche

1. Ventil (1) für Fluide, sich erstreckend zwischen einer Einlassleitung (2) des Fluids und einer Auslassleitung (3) des Fluids entlang einer Hauptausdehnungsrichtung (4), umfassend:
- eine Zwischenkammer (5), die zwischen der Einlassleitung (2) und der Auslassleitung (3) positioniert ist und eine Einlassöffnung (6) aufweist, bildend eine Fluidkommunikation zwischen der Einlassleitung (2) und der Zwischenkammer (5), und eine Auslassöffnung (7), bildend eine Fluidkommunikation zwischen der Auslassleitung (3) und der Zwischenkammer (5) ;
- eine erste Verschlussklappe (11), die betriebswirksam mit der Einlassöffnung (6) assoziiert ist und zwischen einer offenen Position und einer geschlossenen Position der Einlassöffnung (6) entlang einer Bewegungsrichtung (12) bewegbar ist, die quer zur Hauptausdehnungsrichtung (4) verläuft;
- eine zweite Verschlussklappe (13), die betriebswirksam mit der Auslassöffnung (7) assoziiert ist und zwischen einer offenen Position und einer geschlossenen Position der Auslassöffnung (7) bewegbar ist, wobei die erste Verschlussklappe (11) und die zweite Verschlussklappe (13) entlang der Bewegungsrichtung (12) übereinandergelagert angeordnet sind und die zweite Verschlussklappe (13) entlang der Bewegungsrichtung (12) bewegbar ist;
- eine Einheit (15) zum Bewegen der ersten Verschlussklappe (11) und der zweiten Verschlussklappe (13), bewegbar entlang der Bewegungsrichtung (12), um eine jede Verschlussklappe zu bewegen, wobei die Bewegungseinheit (15) für beide Verschlussklappen gemeinsam ist, wobei die Bewegungseinheit (15) eine Stange (16) umfasst, die sich zwischen einem jeweiligen Betriebsabschnitt (17) erstreckt, der mit der ersten Verschlussklappe (11) oder der zweiten Verschlussklappe (13) in Eingriff gelangen kann, um diese zu bewegen, und einem jeweiligen Antriebsabschnitt (18), der gegenständig zum Betriebsabschnitt (17) angeordnet ist, wobei die Stange (16) entlang der Bewegungsrichtung (12) gemäß einer ersten Bewegungsrichtung (19) bewegbar ist, um die erste Verschlussklappe (11) aus der geschlossenen Position in die offene Position zu bewegen, wobei die Stange (16) entlang der Bewegungsrichtung (12) gemäß einer zweiten Bewegungsrichtung (21) bewegbar ist, die gegenständig zur ersten Bewegungsrichtung verläuft, um die zweite Verschlussklappe (13) aus der geschlossenen Position in die offene Position zu bewegen, sodass die Bewegung einer Verschlussklappe unabhängig von der Bewegung der anderen Verschlussklappe ist;
- Mittel (42) für den Antrieb der Stange (16), assoziiert mit dem Antriebsabschnitt (18) der Stange (16),
wobei diese Antriebsmittel (42) ein elektromagnetisches Element (44) umfassen, um die Stange (16) entlang der ersten Richtung (19) oder entlang der zweiten Richtung (21) zu bewegen, **dadurch gekennzeichnet, dass** der elektromagnetische Kreislauf (46) des elektromagnetischen Elements (44) vom Schwingspulentyp ist
und dass die Stange (16) durch ein Durchführungsloch eingeführt wird, das auf der zweiten Verschlussklappe (13) ausgebildet ist, wobei die Bewegungseinheit (15) Zugmittel (23) umfasst, die am Betriebsabschnitt (17) der Stange (16) angeordnet sind, um die zweite Verschlussklappe (13) aus der geschlossenen Position in die offene Position zu ziehen, wobei das Loch der zweiten Verschlussklappe (13) eine größere Breite als die jeweilige Breite der Stange (16) aufweist, sodass ein Spalt (33) zwischen der zweiten Verschlussklappe (13) und der Stange (16) für das Durchströmen des Fluids entsteht, wenn die erste Verschlussklappe (11) geöffnet und die zweite Verschlussklappe (13) geschlossen ist.

2. Ventil (1) für Fluide nach Anspruch 1, **dadurch gekennzeichnet, dass** der Betriebsabschnitt (17) der Stange (16) ein Schiebeende (20) aufweist, dass gegen die erste Verschlussklappe (11) angeschlagen werden kann, um diese von der geschlossenen Position in die offene Position zu schieben.

3. Ventil (1) für Fluide nach einem der vorhergehenden Ansprüche, **dadurch gekennzeichnet, dass** es erste Dichtungsmittel (24) umfasst, die zwischen der zweiten Verschlussklappe (13) und der Auslassöffnung (7) positioniert sind, und zweite Dichtungsmittel (25), die zwischen der zweiten Verschlussklappe (13) und der Zwischenkammer (5) positioniert sind, wobei die zweiten Dichtungsmittel (25) relativ zu den ersten Dichtungsmitteln (24) entlang einer Bewegungsrichtung, die wegführend von den ersten Dichtungsmitteln (24) verläuft, beabstandet sind.

4. Ventil (1) nach Anspruch 3, **dadurch gekennzeichnet, dass** die zweiten Dichtungsmittel (25) einen ersten Teil umfassen, der mit der Zwischenkammer (5) verbunden ist, und einen zweiten Teil, der mit der zweiten Verschlussklappe (13) verbunden ist.

5. Ventil (1) nach Anspruch 4, **dadurch gekennzeichnet, dass** der zweite Teil (30) der zweiten Dichtungsmittel (25) einen Teil aufweist, der entlang einer Richtung hervorspringt, die quer zur Bewegungsrichtung (12) verläuft, wobei der erste Teil (29) der zweiten Dichtungsmittel (25) einen hervorspringenden Teil aufweist, der mit dem hervorspringenden Teil der zweiten Dichtungsmittel (25) während der geschlossenen Position der zweiten Verschlussklappe (13) zu koppeln ist.

6. Ventil (1) nach Anspruch 4 oder 5, **dadurch gekennzeichnet, dass** die ersten Dichtungsmittel (24) und der zweite Teil (30) der zweiten Dichtungsmittel (25) separate Körper umfassen.

7. Ventil (1) nach Anspruch 4 oder 5, **dadurch gekennzeichnet, dass** die ersten Dichtungsmittel (24) und der zweite Teil (30) der zweiten Dichtungsmittel (25) durch einen einzigen Körper ausgebildet sind, wobei zwischen den ersten Dichtungsmitteln (24) und dem zweiten Teil (30) der zweiten Dichtungsmittel (25) ein ringförmiger Schwächungsabschnitt (31) vorhanden ist, der eine flexible Zone der Dichtungsmittel bildet.

8. Ventil (1) nach einem der Ansprüche 5 bis 7, wenn abhängig von Anspruch 5, **dadurch gekennzeichnet, dass** die Zwischenkammer (5) einen Übergangsbereich (32) umfasst, der sich wegführend von den ersten Dichtungsmittel (24) und von der ersten Verschlussklappe (11) erstreckt, wobei der Übergangsbereich (32) während der geschlossenen Position der zweiten Verschlussklappe (13) über den Spalt (33) in Fluidkommunikation mit dem Rest der Zwischenkammer (5) steht.

9. Ventil (1) nach einem der vorhergehenden Ansprüche, **dadurch gekennzeichnet, dass** es erste elastische Mittel (34) umfasst, die zwischen der ersten Verschlussklappe (11) und der oberen Wand (9) des Ventils (1), beabstandet von der Einlassöffnung (6), wegführend von der zweiten Verschlussklappe (13) positioniert sind, wobei die ersten elastischen Mittel (34) während der geschlossenen Position der ersten Verschlussklappe (11) gedehnt und während der offenen Position der ersten Verschlussklappe (11) zusammengedrückt werden, sodass die Rückkehr der ersten Verschlussklappe (11) aus der offenen Position in die geschlossene Position erleichtert wird.

10. Ventil (1) nach Anspruch 9, **dadurch gekennzeichnet, dass** es magnetische Anzugsmittel (36) umfasst, die zwischen der oberen Wand (9) und der ersten Verschlussklappe (11) positioniert und zwischen einem aktiven Zustand und einem inaktiven Zustand konfigurierbar sind, wobei die magnetischen Anzugsmittel (36) konfiguriert sind, um die erste Verschlussklappe (11) hinführend zur oberen Wand (9) anzuziehen, wenn sich die erste Verschlussklappe (11) aus der geschlossenen Position in die offene Position bewegt und wenn der Abstand zwischen der ersten Verschlussklappe (1) und der oberen Wand (9) geringer ist als der Abstand zwischen der ersten Verschlussklappe (11) während der Ruheposition und der oberen Wand (9).

11. Ventil (1) nach Anspruch 10, **dadurch gekennzeichnet, dass** die magnetischen Anzugsmittel (36) ausgelegt sind, um die erste Verschlussklappe (11) während des aktiven Zustands gegen die obere Wand (9) während der offenen Position beizubehalten, sodass die erste Verschlussklappe (11) offen gehalten wird.

12. Ventil (1) nach Anspruch 10 oder 11, **dadurch gekennzeichnet, dass** die magnetischen Anzugsmittel (36) einen Elektromagnet (45) umfassen, der an der oberen Wand (9) angeordnet ist, sowie ferromagnetisches Material, das mit der ersten Verschlussklappe (11) assoziiert ist.

13. Ventil (1) nach einem der vorhergehenden Ansprüche, **dadurch gekennzeichnet, dass** es zweite elastische Mittel (38) umfasst, die zwischen der zweiten Verschlussklappe (13) und der Bodenwand (10) der Zwischenkammer (5) an der entgegengesetzten Seite relativ zur ersten Verschlussklappe (11) positioniert sind, wobei die zweiten elastischen Mittel (38) während der geschlossenen Position der zweiten Verschlussklappe (13) gedehnt und während der offenen Position der zweiten Verschlussklappe (13) zusammengedrückt werden, sodass die Rückkehr der zweiten Verschlussklappe (13) aus der offenen Position in die geschlossene Position erleichtert wird.

14. Ventil (1) nach einem der vorhergehenden Ansprüche, die von Anspruch 4 abhängig sind, **dadurch gekennzeichnet, dass** es dritte elastische Mittel (40) umfasst, die zwischen dem zweiten Teil (30) der zweiten Dichtungsmittel (25) und der Bodenwand (10) der Zwischenkammer (5) auf der entgegengesetzten Seite relativ zur ersten Verschlussklappe (11) positioniert sind, wobei die dritten Dichtungsmittel (40) mindestens teilweise zusammengedrückt sind, sodass der zweite Teil (30) der zweiten Dichtungsmittel (25) während der geschlossenen Position der zweiten Verschlussklappe (13) gegen den ersten Teil (29) der zweiten Dichtungsmittel (25) anschlagend beibehalten wird.

15. Ventil (1) nach einem der vorhergehenden Ansprüche, **dadurch gekennzeichnet, dass** das elektromagnetische Element (44) einen Magnet (45) umfasst, der in einer Position relativ zur Stange (16) fixiert ist, und einen elektromagnetischen Kreislauf (46), der mit dem Antriebsabschnitt (18) der Stange (16) verbunden ist, wobei der elektromagnetische Kreislauf (46) betriebswirksam mit dem Magnet (45) assoziiert und hinführend zu diesem oder wegführend von diesem bewegbar ist.

16. Ventil (1) nach Anspruch 15, **dadurch gekennzeichnet, dass** der elektromagnetische Kreislauf (46) mindestens ein elektrisches Stromkabel (47) umfasst, das in Form einer Spirale gewunden ist.

## Revendications

1. Soupape (1) pour des fluides se prolongeant entre un conduit d'entrée (2) du fluide et un conduit de sortie (3) du fluide le long d'une direction principale d'extension (4), comprenant :
- une chambre intermédiaire (5) positionnée entre le conduit d'entrée (2) et le conduit de sortie (3) et comportant une ouverture d'entrée (6) formant une communication fluidique entre le conduit d'entrée (2) et la chambre intermédiaire (5) et une ouverture de sortie (7) formant une communication fluidique entre le conduit de sortie (3) et la chambre intermédiaire (5) ;
- un premier obturateur (11) fonctionnellement associé à l'ouverture d'entrée (6) et mobile entre une position d'ouverture et une position de fermeture de l'ouverture d'entrée (6) le long d'une direction de mouvement (12) transversale à la direction principale d'extension (4) ;
- un second obturateur (13) fonctionnellement associé à l'ouverture de sortie (7) et mobile entre une position d'ouverture et une position de fermeture de l'ouverture de sortie (7) ; lesdits premier obturateur (11) et second obturateur (13) étant mutuellement superposés le long de la direction de mouvement (12) et le second obturateur (13) étant mobile le long de la direction de mouvement (12) ;
- une unité (15), servant à déplacer le premier obturateur (11) et le second obturateur (13), mobile le long de la direction de mouvement (12) pour déplacer chaque obturateur ; l'unité de déplacement (15) étant commune aux deux obturateurs ; ladite unité de déplacement (15) comprenant une tige (16) se prolongeant entre une portion fonctionnelle (17) respective pouvant se mettre en prise avec le premier obturateur (11) ou le second obturateur (13) pour les déplacer et une portion d'entraînement (18) respective opposée à la portion fonctionnelle (17) ;
la tige (16) étant mobile le long de la direction de mouvement (12) selon une première direction (19) pour déplacer le premier obturateur (11) de la position d'ouverture à la position de fermeture ; la tige (16) étant mobile le long de la direction de mouvement (12) selon une seconde direction (21) opposée à la première direction pour déplacer le second obturateur (13) de la position de fermeture à la position d'ouverture de manière à ce que le déplacement d'un obturateur soit indépendant du déplacement de l'autre obturateur ;
- des moyens (42) servant à entraîner la tige (16) associés à la portion d'entraînement (18) de la tige (16) ;
lesdits moyens d'entraînement (42) comprenant un élément électromagnétique (44) pour déplacer la tige (16) le long de la première direction (19) ou le long de la seconde direction (21) ; **caractérisée en ce que** le circuit électromagnétique (46) de l'élément électromagnétique (44) est de type à bobine mobile et **en ce que** la tige (16) est insérée à travers un trou passant présent sur le second obturateur (13) ; l'unité de déplacement (15) comprenant des moyens de traction (23) fixés à la portion fonctionnelle (17) de la tige (16) pour actionner le second obturateur (13) de la position de fermeture à la position d'ouverture ; ledit trou du second obturateur (13) comportant une largeur supérieure à la largeur respective de la tige (16) de manière à laisser un écartement (33) entre le second obturateur (13) et la tige (16) pour le passage du fluide lorsque le premier obturateur (11) est ouvert et le second obturateur (13) fermé.

2. Soupape (1) pour des fluides selon la revendication 1, **caractérisée en ce que** la portion fonctionnelle (17) de la tige (16) comporte une extrémité de poussée (20) pouvant se mettre en butée contre le premier obturateur (11) pour l'actionner de la position de fermeture à la position d'ouverture.

3. Soupape (1) pour des fluides selon l'une quelconque des revendications précédentes, **caractérisée en ce qu'**elle comprend des premiers moyens d'étanchéité (24) positionnés entre le second obturateur (13) et l'ouverture de sortie (7) et des seconds moyens d'étanchéité (25) positionnés entre le second obturateur (13) et la chambre intermédiaire (5) ; les seconds moyens d'étanchéité (25) étant espacés par rapport aux premiers moyens d'étanchéité (24) le long d'une direction d'éloignement à partir des premiers moyens d'étanchéité (24).

4. Soupape (1) selon la revendication 3, **caractérisée en ce que** les seconds moyens d'étanchéité (25) comprennent une première partie reliée à la chambre intermédiaire (5) et une seconde partie reliée au second obturateur (13).

5. Soupape (1) selon la revendication 4, **caractérisée en ce que** la seconde partie (30) des seconds moyens d'étanchéité (25) comporte une partie en saillie le long d'une direction transversale à la direction de mouvement (12) ; la première partie (29) des seconds moyens d'étanchéité (25) comportant une partie en saillie à accoupler à la partie en saillie des seconds moyens d'étanchéité (25) pendant la position fermée du second obturateur (13).

6. Soupape (1) selon les revendications 4 ou 5, **caractérisée en ce que** les premiers moyens d'étanchéité (24) et la seconde partie (30) des seconds moyens d'étanchéité (25) comprennent des corps séparés.

7. Soupape (1) selon les revendications 4 ou 5, **caractérisée en ce que** les premiers moyens d'étanchéité (24) et la seconde partie (30) des seconds moyens d'étanchéité (25) sont formés par un seul corps ; entre les premiers moyens d'étanchéité (24) et la seconde partie (30) des seconds moyens d'étanchéité (25) se trouve une partie annulaire (31) de faiblesse formant une zone souple des moyens d'étanchéité.

8. Soupape (1) selon l'une quelconque des revendications de 5 à 7 lorsqu'elle dépend de la revendication 5, **caractérisée en ce que** la chambre intermédiaire (5) comprend un espace transitoire (32) se prolongeant en s'éloignant des premiers moyens d'étanchéité (24) et du premier obturateur (11) ; l'espace transitoire (32) étant en communication fluidique, pendant la position fermée du second obturateur (13), avec le reste de la chambre intermédiaire (5) par l'intermédiaire de l'écartement (33).

9. Soupape (1) selon l'une quelconque des revendications précédentes, **caractérisée en ce qu'**elle comprend des premiers moyens élastiques (34) positionnés entre le premier obturateur (11) et la paroi supérieure (9) de la vanne (1) espacée de l'ouverture d'entrée (6) éloignée du second obturateur (13) ; les premiers moyens élastiques (34) étant étendus pendant la position fermée du premier obturateur (11) et comprimés pendant la position ouverte du premier obturateur (11) de manière à faciliter le retour du premier obturateur (11) de la position d'ouverture à la position de fermeture.

10. Soupape (1) selon la revendication 9, **caractérisée en ce qu'**elle comprend des moyens d'attraction magnétique (36) positionnés entre la paroi supérieure (9) et le premier obturateur (11) et pouvant être configurés entre une condition active et une condition inactive ; lors de la condition active, les moyens d'attraction magnétiques (36) sont configurés pour attirer le premier obturateur (11) vers la paroi supérieure (9) lorsque le premier obturateur (11) se déplace de la position de fermeture vers la position d'ouverture et lorsque la distance entre le premier obturateur (11) et la paroi supérieure (9) est inférieure à la distance entre le premier obturateur (11), lors de la position de repos, et la paroi supérieure (9).

11. Soupape (1) selon la revendication 10, **caractérisée en ce que** les moyens d'attraction magnétique (36) sont configurés pour maintenir, pendant la condition active, le premier obturateur (11) en butée contre la paroi supérieure (9) pendant la position d'ouverture de manière à maintenir ouvert le premier obturateur (11).

12. Soupape (1) selon les revendications 10 ou 11, **caractérisée en ce que** les moyens d'attraction magnétique (36) comprennent un électroaimant (45), situé en correspondance de la paroi supérieure (9), et un matériau ferromagnétique associé au premier obturateur (11).

13. Soupape (1) selon l'une quelconque des revendications précédentes, **caractérisée en ce qu'**elle comprend des seconds moyens élastiques (38) positionnés entre le second obturateur (13) et une paroi de fond (10) de la chambre intermédiaire (5) sur le côté opposé par rapport au premier obturateur (11) ; les seconds moyens élastiques (38) étant étendus pendant la position fermée du second obturateur (13) et comprimés pendant la position ouverte du second obturateur (13) de manière à faciliter le retour du second obturateur (13) de la position d'ouverture à la position de fermeture.

14. Soupape (1) selon l'une quelconque des revendications précédentes dépendant de la revendication 4, **caractérisée en ce qu'**elle comprend des troisièmes moyens élastiques (40) positionnés entre la seconde partie (30) des seconds moyens d'étanchéité (25) et la paroi de fond (10) de la chambre intermédiaire (5) sur le côté opposé par rapport au premier obturateur (11) ; les troisièmes moyens élastiques (40) étant au moins en partie comprimés de manière à maintenir la seconde partie (30) des seconds moyens d'étanchéité (25) en butée contre la première partie (29) des seconds moyens d'étanchéité (25) pendant la position fermée du second obturateur (13).

15. Soupape (1) selon l'une quelconque des revendications précédentes, **caractérisée en ce que** l'élément électromagnétique (44) comprend un aimant (45) en position fixe par rapport à la tige (16) et un circuit électromagnétique (46) relié à la portion d'entraînement (18) de la tige (16) ; le circuit électromagnétique (46) étant fonctionnellement associé à l'aimant (45) et pouvant se rapprocher ou s'éloigner de celui-ci.

16. Soupape (1) selon la revendication 15, **caractérisée en ce que** le circuit électromagnétique (46) comprend au moins un câble d'alimentation (47) enroulé sous forme d'une spirale.
